# EUROPEAN PATENT APPLICATION

(11) **EP 2 025 740 A1**
(43) Date of publication of application: **18.02.2009**
(21) Application number: 08161145.1
(22) Date of filing: 25.07.2008
(51) Int. Cl.: C11B 3/08, C11B 15/00, B01J 19/00

(54) **Process for making ozonised olive oil gel and the gel obtained**

(30) Priority: 02.08.2007 IT BO20070554
(71) Applicant: Papa, Franco, 28040 Lesa NO (IT); Parodi, Filippo Ernestino, 28100 Novara (IT); Teti, Salvatore, 24030 Terno d'Isola (BG) (IT); Ricci, Gianfranco, 28831 Baveno (VB) (IT)
(72) Inventor: Papa, Franco, 28040 Lesa NO (IT); Parodi, Filippo Ernestino, 28100 Novara (IT); Teti, Salvatore, 24030 Terno d'Isola (BG) (IT); Ricci, Gianfranco, 28831 Baveno (VB) (IT)
(74) Representative: Lanzoni, Luciano

(57) **Abstract**

A process for making oil which is rich in ozone in the form of a gel comprises the steps of introducing olive oil in liquid form and ozone into a reaction chamber; in which during the contact step there is a step of controlled cooling of the reaction chamber in controlled pressure conditions, until a stable gel has been formed.

## Description

The present invention relates to a process for making a composition which is rich in ozone, in gel form, obtained starting with olive oil.

At present, it is known that a basic substance consisting of olive oil can be enriched with ozone.

Prior art processes comprise a step of bubbling ozone in a reactor containing oil.

With these processes so-called "ozonised" oils are obtained, that is to say, having a high oxidising potential, useful for many applications, in particular in the medical sector, as disinfectant.

However, the effectiveness of these prior art substances depends on the stability of the bonds obtained.

In the medical sector the substance form of aggregation is also important, which in the case of oil in the liquid state does not always allow the substance to remain for long enough in the area in which it is applied.

The main aim of the present invention is to overcome the disadvantages of the prior art by proposing a composition of ozonised oil in gel form, with a high level of stability and high oxidising potential.

Accordingly, the present invention achieves these aims and others, which are more apparent in the detailed description which follows, with a process whose functional characteristics are described in the independent claims herein.

Additional embodiments are described in the dependent claims.

The invention is described in more detail below.

The production of olive oil-based ozonised gel requires two basic ingredients, consisting of a predetermined quantity of ozone to be used for oxidation through contact of a predetermined quantity of olive oil, preferably oil marketed in Italy as "extra virgin olive oil", that is to say having a limited percentage of free oleic acid, which may be indicated as a percentage not greater than 0.8% of the total weight.

The ozone is preferably produced during the process, therefore, there must be a suitably powered ozone generator available, as well as an air compressor and an air drier with which to feed the ozone generator.

The oxidation reaction of the olive oil is of the known type and is implemented by placing the quantity of oil to be ozonised in a reaction chamber of a contact reactor, of the known type and therefore not described in further detail.

It is also known that the oxidation reaction initially involves elimination and/or transformation of the oleic acid (or cis-9-octadecenoic acid) which is a mono-unsaturated carboxylic acid with 18 carbon atoms, which melts at 16 °C and which at ambient temperature is a liquid which represents approximately 75% of olive oil acids.

To improve the reaction, the reactor will also preferably be equipped with diffusers, for example ceramic diffusers placed in a position where the ozone arrives in the reactor, so that the dose of ozone introduced into the reaction chamber can strike the maximum part of the quantity of oil placed in the reactor, and in the most uniform way. According to the invention, the reaction chamber is cooled during the olive oil oxidation reaction step, and this is because the oxidation reaction is an exothermic reaction, therefore liberating heat.

It has been observed that failure to remove the heat liberated by the reaction may result in negative effects, including combustion of peroxides produced as the reaction gradually occurs and slowing of the olive oil gelling process.

With regard to this, it was also found that the reactor must not be closed, and in any case must have controlled pressure, since the formation of peroxides in the presence of relatively high pressure values could trigger their combustion.

To cool the oxidation reaction, the reactor will therefore have a refrigerating cycle for cooling water used as a heat exchange fluid.

In a preferred embodiment of process implementation, cooling is achieved with a reaction chamber hollow space or jacket where water cooled to the lowest possible temperature is allowed to circulate.

The reactor can preferably be completed with a catalytic residual ozone destroyer, devices for measuring ozone in the environment and in the gas phase, and a kit for measuring peroxides, as well as a mechanical stirrer in the reaction chamber positioned at the head of the contact reactor so as to keep the oil moving, thus guaranteeing product homogeneity.

In inventing the process it was observed that adhering to the quantities of oil and ozone is a critical parameter for a successful reaction, that is to say, to obtain a gel with a high percentage of ozone and which is stable with the passage of time.

For this purpose, the possibility of using an ozone generator which produces a good concentration (at least 3% in dry air, corresponding to a concentration of 25 g/m³) was significant.

The generator used may also advantageously be fed with dried compressed air which has a dew point not lower than -70 °C.

Experimentation showed that at least 17 grams of ozone are required for every 100 grams of oil.

Therefore, to convert 100 grams of oil into a gel in one hour, at least 17 grams of ozone would be needed.

It also proved important to keep this ratio constant in order to be able to guarantee the constancy of the end product.

Experiments also revealed that careful measurement of the concentration of ozone during the gel forming process is also extremely important.

According to the process disclosed, the oil oxidation reaction must be carried out slowly, allowing the oleic acid to break down and then bind with the ozone molecules and its conclusion may be ascertained, not just by visual inspection (when the gel is formed it is white and dense), but also by measurement of the peroxides content, which provides a safety data item as regards the constancy of product properties.

According to the invention, if the oxidation reaction is developed in particular cooled temperature and pressure conditions, a gel is created which is rich in peroxides (chemical compounds containing the group formed by two oxygen atoms joined by a simple covalent bond) which are trapped in the gel-like structure of the product.

Once the gel product obtained is applied for example to an area of the skin, these peroxides are freed from the gel-like structure, become unstable and break down releasing oxygen, thus acting as oxidisers.

The product obtained with the process, by way of example only and without limiting the scope of the invention, has the following properties:

| | |
|---|---|
| Refractive index at 25 °C | 1.466 - 1.469 |
| Density at 25 °C [g/cc] | 0.910 - 0.916 |
| Acid value | [g KOH/g] MIN. 4 |
| Peroxide values | [meq O₂/kg] max. 10 |
| Iodine | POSSIBLE NEGLIGIBLE TRACES |
| Saponification | [mg KOH/g] 185 - 195 |
| Absorption at 270 nm | 0.20 |
| % solubilised ozone | 7.5 - 8.5 |
| Residual oleic acid C18:1 | 1.5 - 4.0% |

The ozonised oil obtained using the process is in the form of a white dense gel, which is extremely stable at standard ambient conditions.

It can be used for 24 months if preserved in perfectly waterproof containers.

The invention is described with reference to a preferred embodiment but it shall be understood that equivalent modifications may be made without thereby departing from the protective scope of this patent.

## Claims

1. A process for making oil which is rich in ozone in the form of a gel, comprising the steps of:
- introducing into a reaction chamber a quantity of "extra virgin" olive oil in liquid form with a reduced percentage of free oleic acid, preferably being less than 0.8% of the weight;
- using bubbling to bring into contact in the reaction chamber said quantity of extra virgin olive oil and a quantity of ozone; wherein during the contact step there is a step of controlled cooling of the reaction chamber in controlled pressure conditions, until an ozonised gel has been formed which is stable with the passage of time.

2. The process according to claim 1, wherein the cooling temperature is between 10 and 15 °C.

3. The process according to claim 1 or 2, wherein the controlled pressure of the reaction chamber is between 0.7 and 0.9 bar.

4. The process according to any of the foregoing claims, wherein the ozone is produced by an ozone generator fed with dried air and has a concentration of approximately 25 g/m³.

5. The process according to any of the foregoing claims, wherein the oil has a percentage of free oleic acid not greater than 0.8% of the total weight.

6. The process according to any of the foregoing claims, wherein there is a step of uniform diffusion of the ozone introduced into the oil in the reaction chamber.

7. The process according to any of the foregoing claims, wherein the cooling is achieved with a reaction chamber hollow space or jacket where refrigerated water is allowed to circulate.

8. The process according to any of the foregoing claims, comprising a step of mechanical stirring of the quantities of oil and ozone present in the reaction chamber so as to improve product homogeneity.

9. The process according to any of the foregoing claims, wherein at least 17 grams of ozone are needed for every 100 grams of oil.

10. The process according to any of the foregoing claims, comprising a step of measuring the ozone and destroying residual ozone.

11. The process according to any of the foregoing claims, comprising a step of measuring peroxides.

12. An ozonised olive oil gel, having the following properties:
| | | |
|---|---|---|
| Refractive index at 25 °C | | 1.466 - 1.469 |
| Density at 25 °C | [g/cc] | 0.910 - 0.916 |
| Acid value | [g KOH/g] | max. 4 |
| Peroxide values | [meq O₂/kg] | MIN. 10 |
| Iodine | POSSIBLE NEGLIGIBLE TRACES | |
| Saponification | [mg KOH/g] | 185 - 195 |
| Absorption at 270 nm | | 0.20 |
| % solubilised ozone | | 7.5 - 8.5 |
| Residual oleic acid C18:1 | | 1.5 - 4.0 % |
the percentage of ozone solubilised in the gel is stable with the passage of time 12 - 24 months after production if the gel is preserved in a waterproof environment.
